Europäisches Patentamt

European Patent Office

Office européen des brevets

(19)

(11) Numéro de publication : **0 025 738**
**B1**

(12) # FASCICULE DE BREVET EUROPÉEN

(45) Date de publication du fascicule du brevet :
**11.05.83**

(51) Int. Cl.³ : **C 03 C 17/23, B 05 B 15/00**

(21) Numéro de dépôt : **80401235.9**

(22) Date de dépôt : **28.08.80**

(54) **Procédé et dispositif de fabrication de verre revêtu.**

(30) Priorité : **31.08.79 JP 110183/79**

(43) Date de publication de la demande :
**25.03.81 Bulletin 81/12**

(45) Mention de la délivrance du brevet :
**11.05.83 Bulletin 83/19**

(84) Etats contractants désignés :
**BE DE FR GB IT LU NL SE**

(56) Documents cités :
**FR A 2 046 320**
**FR A 2 277 049**
**FR A 2 288 068**
**FR A 2 306 176**
**FR A 2 348 165**
**FR A 2 377 981**
**GB A 2 016 444**
**US A 3 887 349**

(73) Titulaire : **SAINT-GOBAIN VITRAGE**
**Les Miroirs 18, avenue d'Alsace**
**F-92400 Courbevole (FR)**

(72) Inventeur : **Fujiwara, Kenji**
**4-14 Koshienguchi 4-chome**
**Nishinomiya-shi Hyogo-ken (JP)**
Inventeur : **Kawahara, Hideo**
**10, Inano-cho 7-chome**
**Itami-shi Hiogo-ken (JP)**

(74) Mandataire : **Eudes, Marcel**
**Saint-Gobain Recherche 39 Quai Lucien Lefranc**
**F-93304 Aubervilliers Cedex (FR)**

Jouve, 18, rue St-Denis, 75001 Paris, France

# 0 025 738

## Procédé et dispositif de fabrication de verre revêtu

La présente invention concerne un procédé de fabrication d'un verre revêtu. Plus précisément, elle porte sur un procédé par lequel on fabrique de façon continue un verre plat revêtu d'un film d'oxydes métalliques en déposant ce film d'oxydes métalliques sur un ruban de verre flotté à sa sortie d'un four de flottage.

On sait que le dépôt d'un film d'oxydes métalliques à la surface d'un vitrage permet de conférer à celui-ci telle ou telle caractéristique optique ou électrique déterminée. Par exemple, on utilise fréquemment, à l'heure actuelle, des verres réfléchissant les rayons calorifiques en raison de leurs caractéristiques optiques car ils sont très utiles pour économiser l'énergie et ont un aspect esthétique grâce à leur effet de miroir. Pour pouvoir profiter de cet aspect, il est très important que les verres revêtus aient une excellente planéité mais aussi un film de couleur uniforme sans irrégularité de teinte.

Il existe plusieurs procédés de fabrication de tels verres revêtus.

Par exemple, on connaît un procédé consistant à réchauffer des feuilles refroidies et découpées pour déposer un film d'oxydes métalliques à leur surface. Toutefois, ce procédé ne donne pas d'excellents résultats car il est très difficile de déposer un film d'une épaisseur uniforme sur toute la surface de ces feuilles.

On peut aussi déposer en continu un film d'oxydes métalliques sur un ruban de verre plat à haute température à sa sortie d'un four de flottage. Ce procédé tend à se généraliser en raison de l'excellent état de surface du verre flotté. Il consiste à déposer sur le ruban de verre entre le four de flottage et une étenderie, une solution, une poudre ou un gaz contenant les produits servant à la formation du film d'oxydes. On a constaté qu'à la traversée de la zone de dépôt, le verre subissait une baisse de température importante préjudiciable à la bonne qualité du revêtement. Pour remédier à cet inconvénient il a été proposé dans le brevet français 2 377 981 de réduire la perte de chaleur du ruban de verre en disposant des sources de chaleur à sa proximité, l'une au voisinage immédiat de sa surface supérieure, en amont de la zone de dépôt, l'autre au voisinage immédiat de sa surface inférieure, près de la zone de dépôt.

On a également constaté que la température de surface du verre au moment du dépôt, dans une installation donnée, n'était pas la même pour des épaisseurs de verre différentes et que les caractéristiques du film de revêtement obtenu étaient influencées par cette température de surface. Ainsi, on a proposé dans le brevet BE 874528 d'éliminer les différences de température de surface dues à des différences d'épaisseur du ruban de verre, de façon à obtenir une qualité constante des revêtements, en prévoyant de faire brûler à la surface supérieure du verre à revêtir, avant projection de la solution de revêtement, du gaz contenant de l'hydrogène, issu du four de flottage, la longueur de la flamme ainsi obtenue étant contrôlée pour obtenir la température voulue de la surface du verre au moment du dépôt.

Mais toutes ces corrections de la température de surface du verre n'empêchent pas que se créent des écarts de température dans la largeur du ruban de verre, en particulier lorsque ledit ruban traverse une chambre de revêtement relativement ouverte entre le four de flottage et l'étenderie, écarts de température qui rendent difficile l'obtention d'un film uniforme.

La présente invention a pour but de fournir un procédé de fabrication d'un verre revêtu d'un film d'oxydes métalliques, uniforme en composition comme en épaisseur, notamment sur toute la largeur du verre et possédant ainsi d'excellentes caractéristiques optiques.

Selon l'invention, on dépose les agents de revêtement destinés à former ce film d'oxydes métalliques sur un ruban de verre flotté à haute température, entraîné à sa sortie du four de flottage, après avoir effectué une correction de température superficielle du ruban de verre, cette correction consistant en une pluralité d'actions correctrices affectant chacune un secteur distinct de la surface du ruban de verre, les différents secteurs susceptibles de recevoir une action correctrice étant juxtaposés transversalement à la direction de déplacement du ruban de verre.

Un dispositif selon l'invention comprend donc des organes d'ajustement des températures situés entre le four de flottage et le poste de dépôt du film d'oxydes, ces organes étant constitués par des réchauffeurs placés en regard du ruban de verre, au moins au-dessus de la face où s'effectue le dépôt, subdivisés en compartiments à fonctionnement distinct, juxtaposés transversalement à la direction de déplacement du ruban de verre.

Les autres buts et avantages de cette invention seront clarifiés par les explications données ci-après.

Le ruban de verre plat flotté sortant du four de flottage traverse la zone d'équilibrage des températures, puis la zone de dépôt du film d'oxydes avant de pénétrer dans l'étenderie. Dans la zone de dépôt du film d'oxydes, il devient ainsi possible de produire pratiquement, dans le sens transversal, une décomposition thermique uniforme et une oxydation également uniforme des agents de revêtement transformables en des oxydes métalliques.

En général, la température du verre sortant du four de flottage est d'environ 640 °C. Lorsque ce ruban se trouve exposé à l'atmosphère, il se crée un grand écart de températures transversales. Il a été constaté qu'une différence d'environ 20-50 °C existe transversalement entre les températures médiane et latérales dans l'atmosphère de la zone de dépôt du film d'oxydes, même si cette zone est immédiatement juxtaposée au four. On s'est ainsi rendu compte qu'il y avait une différence d'environ 15-30 °C entre les températures relevées transversalement au centre et sur les bords du ruban dès que celui-ci était entraîné

2

dans cette zone de dépôt du film d'oxydes.

Il a été montré que, lors du dépôt des agents de revêtement sur le ruban, de relativement grands écarts transversaux des températures créaient dans la décomposition thermique des agents de revêtement une légère différence conduisant à une variation des épaisseurs transversales du film d'oxyde métallique obtenu. Si l'on utilise plusieurs agents de revêtement, dans le but de fabriquer un vitrage revêtu d'un film de plusieurs oxydes métalliques, vitrage particulièrement demandé, il s'y ajoute des variations transversales de composition, ce qui conduit à des écarts de couleur ou à une irrégularité de teinte et dans le pire des cas, à une baisse de la résistance à l'usure du film obtenu et du rendement de fabrication du produit.

Pour produire des réactions pratiquement uniformes des agents de revêtement, à savoir décomposition thermique, oxydation et transformation en des oxydes métalliques, l'important est de réduire la différence entre les températures médiane et latérales. Au-delà d'une certaine limite, la température superficielle exacte du ruban de verre a toutefois moins d'influence. Par conséquent, lorsque la différence entre les températures médiane et latérales est réglée comme précitée, pour la température centrale du verre plat flotté, il est parfois possible d'effectuer le dépôt à partir d'une température supérieure à environ 300 °C ; il est cependant préférable d'opérer à une température allant de 540 à 630 °C.

La température du verre plat flotté sortant du four de flottage étant d'environ 640 °C, en général on peut opérer à une température au centre de l'ordre de 560 à 590 °C pour effectuer le dépôt dans la partie amont de l'étenderie, ou mieux vers 580 à 600 °C, en amont de cette dernière, en particulier si l'on travaille avec des produits sous forme liquide.

L'écart transversal de température acceptable à la surface d'un ruban de verre flotté pour produire une décomposition thermique et une oxydation pratiquement uniforme des agents de revêtement varie légèrement selon le type et la composition de ces derniers. Mais il est préférable d'obtenir une différence inférieure à 15 °C, de préférence à 10 °C, entre la température médiane et les températures latérales dans la zone de dépôt.

Pour équilibrer ainsi les températures, on peut, dans la zone d'équilibrage, employer diverses méthodes, mais de préférence, on se contentera de chauffer les bords du ruban pour rapprocher leurs températures de la température médiane, voire les porter temporairement à des valeurs supérieures.

La zone d'équilibrage des températures peut être immédiatement juxtaposée ou du moins placée près du four où s'élabore le ruban et une méthode d'équilibrage des températures peut consister à guider vers la surface du verre des gaz de combustion s'échappant du four de flottage, mais on peut employer d'autres méthodes ; il est notamment possible d'installer indépendamment des réchauffeurs en regard de la face du ruban sur laquelle les agents de revêtement seront déposés ou bien des deux faces de celui-ci, ce qui facilite l'opération.

Le verre plat flotté dont les températures sont ajustées comme précité peut alors quitter la zone d'équilibrage des températures pour pénétrer dans la zone de dépôt du film d'oxydes et recevoir les agents de revêtement.

Le temps de séjour du verre plat dans la zone d'équilibrage des températures varie légèrement selon la température, etc... du verre plat flotté. Mais dans le cas où le verre plat flotté est entraîné à une vitesse normale d'environ 6 m/min, il faut au moins un temps de séjour d'environ 20 secondes. On peut facilement déterminer par des essais un temps de séjour nécessaire et suffisant.

On utilise, en tant qu'agents de revêtement, des composés métalliques transformables par décomposition thermique et oxydation en un film d'oxydes métalliques à la surface du verre plat flotté quand ils s'y déposent, ou des compositions renfermant de tels composés. Ces agents de revêtement peuvent être liquides, gazeux ou solides. En tant que composés métalliques, on utilise, de préférence, des complexes ou sels organiques d'acide carboxylique, de β-dicétones de Cr, Al, Ni, Fe, Co, Sn ou Ti, etc..., par exemple des complexes d'acétylacétonate de cobalt, l'acétate de cobalt, etc...

Il est possible d'utiliser ces composés métalliques seuls ou sous forme de solutions dans des solvants capables de les dissoudre. Parmi ces solvants, on peut citer des alcools inférieurs tels que méthanol, éthanol, des cétones tels qu'acétone, méthyléthylacétone, des hydrocarbures paraffiniques tels que benzène, toluène, xylène, des hydrocarbures aliphatiques tels qu'hexane, butane, des esters d'alkyles inférieurs et d'acides carboxyliques aliphatiques inférieurs tels qu'acétate d'éthyle, propionate d'éthyle, etc... Il est possible d'utiliser l'un ou plusieurs de ces solvants.

Les études effectuées ont montré que, tant que les températures, dans le sens transversal étaient bien réglées et que la température centrale du ruban flotté était supérieure à environ 300 °C, on pouvait déposer de façon uniforme un film d'oxydes métalliques sur la surface du ruban de verre. Il a aussi été montré qu'il valait mieux éviter l'utilisation d'une solution trop diluée car, si l'on emploie des agents de revêtement en solution, la chaleur latente d'évaporation des solvants était en général enlevée au verre.

Autrement dit, pour l'emploi en solution, il est souhaitable de préparer une solution renfermant de 7 à 50 % en poids de composés métalliques.

En outre, il est souhaitable d'utiliser les agents de revêtement sous forme de poudre ou gaz (vapeur), et dans ce cas, d'employer des poudres de corps complexes d'acétylacétonate de Cr, Fe, Co, Ni, Al, etc..., ou des poudres d'acétates de ces métaux, d'une granulométrie allant de préférence de 3 à 100 μm environ. Sous cette granulométrie, l'emploi de poudre permet d'obtenir un verre plat flotté revêtu d'un film d'oxyde métalliques suffisamment uniforme en employant plusieurs agents de revêtement.

Les agents de revêtement sont délivrés dans la zone de dépôt du film d'oxydes à l'aide d'un ajutage de pulvérisation en va et vient transversalement à l'avance du ruban ou à l'aide d'une fente fixe transversalement allongée en dessus de celui-ci.

Dans le cas où les agents de revêtement sont sous forme liquide, il est préférable d'utiliser un ajutage de pulvérisation. S'ils sont en poudre ou gaz, il est préférable d'utiliser une fente fixe.

L'invention se trouve expliquée ci-après, en détail, à l'aide des figures jointes.

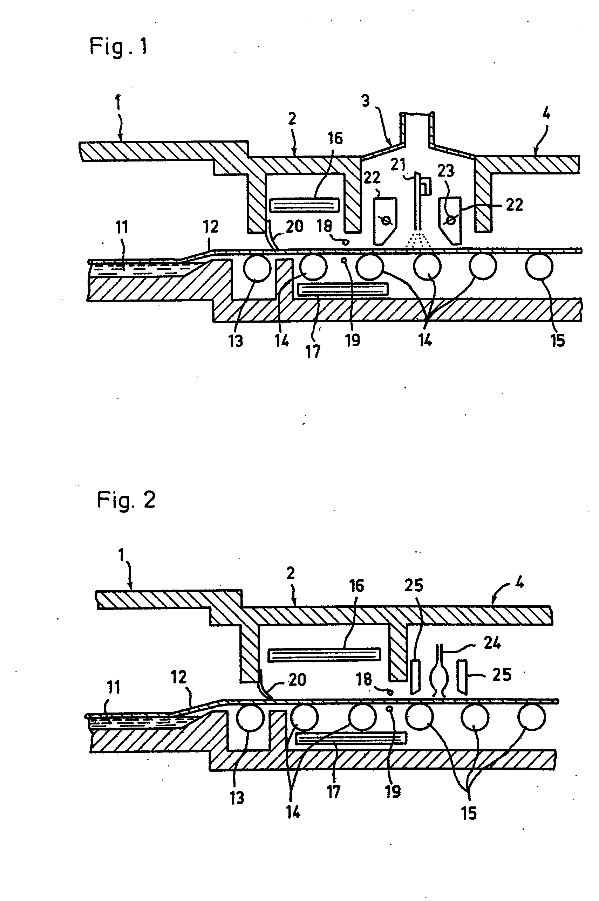

Les figures 1 et 2 représentent des coupes schématiques partielles de deux variantes d'un dispositif de fabrication de verre revêtu, comprenant une zone d'équilibrage des températures, selon l'invention.

Sur la Fig. 1, à la sortie du four de flottage 1 se trouvent placés successivement le poste 2 d'équilibrage des températures puis la chambre 3 équipée d'un appareil de revêtement installé dans l'intervalle précédant l'étenderie 4.

Formé sur un bain d'étain 11, à l'intérieur du four 1, le ruban de verre flotté 12, d'une bonne planéité, est entraîné horizontalement vers la zone d'équilibrage des températures 2 à l'aide des rouleaux 13 et 14.

Ensuite, après dépôt d'un film d'oxydes métalliques au poste de revêtement 3, le ruban 12 est entraîné vers l'étenderie 4 à l'aide d'un rouleau 15.

Juxtaposé au four de flottage, le poste d'équilibrage des températures est équipé d'un réchauffeur supérieur 16 et d'un réchauffeur inférieur 17. Ces réchauffeurs sont divisés chacun en plusieurs compartiments (3 à 10 compartiments, par exemple 7 compartiments) pour régler indépendamment les températures transversales du ruban de verre et en obtenir facilement l'équilibrage.

Des thermocouples 18 et 19 sont installés à peu de distance des surfaces supérieure et inférieure du ruban, en nombre correspondant à celui des compartiments de réchauffage et dans des positions correspondant à celles des compartiments.

L'équilibrage des températures du verre plat flotté se fait à partir des températures mesurées par ces thermocouples 18 et 19. Il est préférable d'installer ces derniers à quelques cm (environ 1 à 10 cm, par exemple 5 cm) de chaque surface du ruban.

La zone de contrôle des températures 2 et le four de flottage du verre flotté 1 sont séparés par un rideau 20. Le courant de la flamme de combustion, à la sortie 3, des gaz contenant un faible volume d'hydrogène qui s'enfuient du four de flottage du verre 1 n'a aucune influence notable sur la zone d'équilibrage des températures 2. De ce fait, il est facile d'ajuster séparément les températures du verre plat flotté 11 dans cette zone pour diminuer l'écart entre la température médiane et les températures latérales du ruban.

L'appareil placé au poste de revêtement 3 est équipé d'un ajutage de pulvérisation 21 faisant le va et vient transversalement au ruban pour déposer les agents de revêtement sur le verre plat flotté dont on a équilibré transversalement les températures ; il comprend aussi, en amont et aval, au-dessus du ruban, des gaines aspirantes 22 équipées chacune d'un registre. Ces gaines servent à évacuer de la chambre 3 les substances de décomposition des agents de revêtement ou des solvants ou bien les agents de revêtement non décomposés etc....

Sur la Fig. 2, la zone de dépôt du film d'oxydes se trouve dans la partie amont du four de recuit 4. D'autre part, elle est équipée d'une buse 24 fixe, transversalement allongée, pour déposer les agents de revêtement sur le ruban dont on a équilibré les températures transversales. Elle comprend aussi des gaines aspirantes 25, en avant et en amont de cet ajutage fixe par rapport au sens de la marche du verre.

Selon l'invention, il est possible d'installer, dans l'étenderie 4 du dispositif montré Fig. 1, un appareil équipé d'une buse fixe 24 et de gaines aspirantes 25 semblables à celles qui se trouvent dans la zone de dépôt de l'étenderie montrée Fig. 2. L'installation d'un tel équipement facilite le travail, car on peut employer au choix l'ajutage de pulvérisation ou la buse fixe. Des exemples illustreront encore l'invention.

Exemple 1

Le dispositif indiqué à la Fig. 1 a été employé pour élaborer un ruban de verre plat flotté d'une épaisseur de 6 mm et d'une largeur de 3,4 m, entraîné horizontalement à une vitesse de 6 m/min du four de flottage 1 vers la zone d'équilibrage des températures 2 juxtaposée à ce four. La température du verre, avant de sortir du four, était de 638 °C. Mais pendant le passage dans la zone d'équilibrage des températures d'environ 2 m de long, les températures médiane et latérales de ce ruban ont été réglées respectivement à 590 °C et 578 °C. Ce verre est ensuite entraîné vers le poste de revêtement 3. En tant qu'agents de revêtement, on a utilisé une solution à 70 % en poids de fer-acétylacétonate et 30 % en poids de chrome-acétylacétonate dissous dans un mélange de toluène et d'alcool isopropylique. En pulvérisant cette solution sur le ruban à raison de 1 400 cm³/min à partir de l'ajutage de pulvérisation 21 faisant 16 cycles de va-et-vient par minute, on a obtenu un verre (A) revêtu d'un film d'oxydes métalliques. Pour la comparaison, on a fabriqué un autre verre revêtu (B) à l'aide du même dispositif sans équilibrer les températures mais en conservant les autres conditions précitées. Plus précisément, dans ce cas, les températures du verre plat juste avant d'entrer dans la chambre de revêtement 3 étaient de 585 °C au centre et de 560 °C sur les bords. Le tableau 1 montre les caractéristiques des deux verres revêtus (A) et (B) ainsi obtenus.

4

Tableau 1

| Echantillons | | Composition du Film (Fe:Cr) | Longueur d'onde dominante en réflexion (nm) | Résistance à l'acide (immersion dans HCl-1N à 40°C |
|---|---|---|---|---|
| Verre revêtu (A) | Partie Centrale | 7,9:2,1 | 490 | 5 - 10 jours |
| | Partie éloignée 1,2 m du centre | 8,0:2,0 | 490 | 5 - 10 jours |
| Verre revêtu (B) | Partie Centrale | 8,0:2,0 | 490 | 5 - 10 jours |
| | Partie éloignée 1,2 m du centre | 8,3:1,7 | 488 | < 5 jours |

Il ressort du tableau 1, en ce qui concerne les caractéristiques et la composition du film, que le verre revêtu (A) obtenu selon la conception de cette invention ne présente presque aucune différence entre les parties centrale et latérales. Par contre, le verre revêtu (B) obtenu sans avoir réglé transversalement les températures montre, entre ces parties, une grande différence de caractéristiques et de composition du film. On comprend qu'il existe des difficultés de teinte et de résistance au vieillissement.

Exemple 2

On a employé le dispositif indiqué à la figure 2, le ruban de verre flotté d'une épaisseur de 6 mm et d'une largeur de 3,4 m entraîné horizontalement à une vitesse de 6 m/min de la sortie du four de flottage 1 vers la zone d'équilibrage des températures 2. La température du verre avant de sortir du four 1 était de 638 °C. Mais pendant le passage dans la zone de contrôle des températures 2, les températures médiane et latérales de ce verre ont été réglées respectivement à 550 °C et 545 °C. Ensuite les agents de revêtement en poudre ont été déposés à l'aide d'un courant d'air à raison de 120 g/min à partir de la base fixe 24. Il s'agissait d'un mélange de fer-acétylacétonate, de chrome-acétylacétonate et de cobalt-acétylacétonate de granulométrie inférieure à 40 μm dans la proportion (en poids) 2 : 3 : 5 selon l'ordre précité.

Malgré l'emploi de trois types différents de composés métalliques, il n'y eut presque aucune différence entre la composition du film au centre et sur les bords du ruban de verre revêtu ainsi obtenu.

Les exemples précités montrent que l'équilibrage des températures transversales du ruban de verre flotté selon la conception de la présente invention permet de fabriquer un verre plat flotté revêtu d'un film d'oxydes métalliques sans écart de caractéristiques ni de composition.

**Revendications**

1. Procédé de fabrication d'un verre revêtu consistant à déposer un film d'oxyde sur un ruban de verre à haute température à sa sortie d'un four de flottage et dans lequel on effectue une correction de température superficielle du ruban de verre avant de déposer le film d'oxyde, caractérisé en ce que la correction consiste en une pluralité d'actions correctrices affectant chacune un secteur distinct de la surface du ruban de verre, les différents secteurs susceptibles de recevoir une action correctrice étant juxtaposés transversalement à la direction de déplacement du ruban de verre.

2. Procédé selon la revendication 1, caractérisé en ce que l'on ajuste les températures superficielles transversales du verre plat flotté de façon à ce qu'il y ait transversalement une différence inférieure à 15 °C entre la température médiane et les températures latérales du ruban dans la zone où l'on dépose les agents de revêtement formant le film d'oxydes.

3. Procédé selon la revendication 2, caractérisé en ce qu'on réchauffe temporairement les bords du ruban à une température supérieure à celle du centre.

4. Procédé selon l'une des revendications 1 à 3, caractérisé en ce que l'on amène la température médiane du ruban dans la zone de dépôt du film à une valeur comprise entre 540 et 630 °C.

5. Procédé selon la revendication 4, caractérisé en ce que les agents de revêtement sont des gaz ou des solides en poudre et qu'on effectue leur dépôt à température médiane comprise entre 560 et 590 °C.

6. Dispositif pour la mise en œuvre du procédé selon les revendications précédentes comprenant un poste de revêtement placé à la sortie du four de flottage, en amont de l'étenderie et caractérisé par des réchauffeurs placés au regard du ruban de verre, au moins au-dessus de la face où s'effectue le dépôt, ces réchauffeurs étant subdivisés en compartiments à fonctionnement distinct, juxtaposés transversalement à la direction de déplacement du ruban de verre.

## Claims

1. Method of making a coated glass consisting of depositing an oxide film on a glass ribbon at high temperature as it leaves a float furnace and in which correction of the surface temperature of the ribbon is carried out before deposition of the oxide film, characterised in that the correction comprises a plurality of correcting actions each affecting a distinct sector of the glass ribbon surface, the different sectors capable of receiving a correcting action being juxtaposed transversely to the direction of motion of the glass ribbon.

2. Method according to claim 1, characterised in that the transverse surface temperatures of the flat float glass are adjusted such that there is a difference less than 15 °C transversely between the temperature in the middle and the temperature at the sides of the ribbon in the zone where coating agents forming the oxide film are deposited.

3. Method according to claim 2, characterised in that the sides of the ribbon are heated temporarily to a temperature greater than that in the middle.

4. Method according to one of claims 1 to 3, characterised in that the temperature in the middle of the ribbon in the zone of deposition of the film is brought to a value between 540 and 630 °C.

5. Method according to claim 4, characterised in that the coating agents are gases or powder solids and their deposition is carried out at a middle temperature between 560 and 590 °C.

6. Device for carrying out a process according to the preceding claims, comprising a coating station situated at the output of a float furnace, upstream of the drawing station, and characterised by heaters placed facing the glass ribbon, at least above the surface on which deposition is carried out, these heaters being subdivided into compartments having distinct functioning, juxtaposed transversely to the direction of displacement of the glass ribbon.

## Ansprüche

1. Verfahren zur Herstellung eines beschichteten Glases durch Niederschlagen eines Oxidfilmes auf ein auf hoher Temperatur befindliches Glasband bei seinem Austritt aus einem Floatglasofen unter Ausgleich der Oberflächentemperatur des Glasbandes vor dem Niederschlagen des Oxidfilmes, dadurch gekennzeichnet, daß der Temperaturausgleich aus einer Vielzahl von korrigierenden Einwirkungen besteht, von denen jede für einen bestimmten Abschnitt der Oberfläche des Glasbandes bestimmt ist, wobei die verschiedenen für eine korrigierende Einwirkung aufnahmefähigen Abschnitte nebeneinander quer zur Vorschubrichtung des Glasbandes angeordnet sind.

2. Verfahren nach Anspruch 1, dadurch gekennzeichnet, daß die transversalen Oberflächentemperaturen des Floatglasbandes derart eingestellt werden, daß in Querrichtung ein Unterschied von weniger als 15 °C zwischen der mittleren Temperatur und den seitlichen Temperaturen des Bandes in der Zone vorliegt, in der die den Oxidfilm bildenden Überzugsmittel niedergeschlagen werden.

3. Verfahren nach Anspruch 2, dadurch gekennzeichnet, daß die Ränder des Bandes vorübergehend auf eine Temperatur oberhalb derjenigen in der Mitte erwärmt werden.

4. Verfahren nach einem der Ansprüche 1 bis 3, dadurch gekennzeichnet, daß die mittlere Temperatur des Bandes in der Filmniederschlagszone auf einen Wert zwischen 540 °C und 630 °C gehalten wird.

5. Verfahren nach Anspruch 4, dadurch gekennzeichnet, daß die Überzugsmittel Gase oder pulverförmige Festkörper sind und daß ihr Niederschlag bei einer mittleren Temperatur zwischen 560 °C und 590 °C vorgenommen wird.

6. Vorrichtung zur Durchführung des Verfahrens nach einem der vorhergehenden Ansprüche mit einer Überzugsstation am Ausgang eines Floatglasofens vor dem Kühlofen, gekennzeichnet durch Aufheizvorrichtungen für das Glasband wenigstens oberhalb der Oberfläche, auf die der Niederschlag erfolgt, wobei die Aufheizvorrichtungen in quer zur Vorschubrichtung des Glasbandes nebeneinander angeordnete Abteilungen mit unterschiedlicher Funktionsweise unterteilt sind.

Fig. 1

Fig. 2